# EUROPEAN PATENT APPLICATION

(11) **EP 4 343 629 A1**
(43) Date of publication of application: **27.03.2024**
(21) Application number: 23154013.9
(22) Date of filing: 30.01.2023
(51) Int. Cl.: G06N 3/0464, G06N 3/082, G06N 3/096, G06N 3/091

(54) **SYSTEM AND METHOD FOR IMPROVING GENERALIZATION IN NEURAL NETWORKS USING SELECTIVE REINITIALIZATION**

(30) Priority: 26.09.2022 NL 2033146
(71) Applicant: NavInfo Europe B.V., 5657 DB Eindhoven (NL)
(72) Inventor: RAMKUMAR, Vijaya Raghavan Thiruvengadathan, 5657 DB Eindhoven (NL); ARANI, Elahe, 5657 DB Eindhoven (NL); ZONOOZ, Bahram, 5657 DB Eindhoven (NL)
(74) Representative: van Breda, Jacobus

(57) **Abstract**

A computer-implemented method for improving generalization in training deep neural networks in online settings. The method comprises a general learning paradigm for sequential data that is referred to as Learn, Unlearn, RElearn (LURE), a dynamic re-initialization method to address the above-mentioned larger problem of generalization of parameterized networks on sequential data by selectively retaining the task-specific connections through the important criteria and re-randomizing the less important parameters at each mega batch of training. The proposed method of selectively forgetting is crucial for retaining previous information all the while improving generalization to unseen samples.

## Description

The invention relates to a computer-implemented method for continual learning in artificial neural networks for improving performance and generalization of Deep Neural Networks applied in large-scale deployments of machine learning systems.

### General Description

In recent years supervised learning in artificial neural networks has attained a human-level performance in many computer-vision tasks (e.g. object detection, classification) where the learner is trained in an offline learning environment with a fixed set of training data. However, in many practical applications such as finance, recommendation systems, fraud detection, autonomous driving, etc, machine learning systems are commonly deployed in an online learning environment where the data is not static and arrives sequentially in a stream of large chunks (or megabatches). Since these systems are used for prediction and decision-making in the real world, it is vital to rapidly incorporate the new incoming data into production machine learning (ML) pipelines by dynamically expanding the acquired knowledge over time. Therefore, it is essential to study Deep Neural Networks (DNNs) in the online learning paradigm due to its relevance in practical settings.

Recent work [1] describes an online learning system as a learner that produces high accuracy and generalizes well at any time while using limited computational resources. Recent works on lifelong learning have pointed out that the Deep Networks learning from an already trained model (warm-starting) makes it difficult for the model to adapt to incoming data, thus, incapacitating the generalization of the DNNs [2]. These implications of warm starting have also been observed in online active learning [3, 4], where it is a common practice to retrain from scratch after every selection. However, training the DNNs from scratch each time the new data arrives is computationally inefficient and the lack of generalization with warm starting undermines the benefits of training with learned features. Moreover, to generalize on unseen samples, the model should capture the generalizable concepts from the samples rather than statistical regularities. Thus, the failure of the current online learning systems to generalize across data streams without bartering computation efficiency presents a striking lacuna for large-scale deployment of machine learning systems.

Conventional intuition suggests that when solving a sequence of related optimization problems such as learning from sequential data, it should be possible to initialize using the solution of the previous iterate-to "warm start" the optimization rather than initialize from scratch which is computationally expensive. However, existing work [2] points out that this warm starting seems to yield poorer generalization performance than models that have fresh random initialization, even though the final training losses are similar. The use of common regularization methods such as weight decay and learning rate annealing does not alleviate the problem of lack of generalization when training on a stream of data. [2] proposes a method of shrinking the coefficients in neural networks of the whole model before training on a new batch of data to improve the generalization.

It is an object of the current invention to remedy the shortcomings of the prior art and to propose a solution for improving generalization in training Deep Neural Networks on continuous and sequential data which are often deployed in real-world scenarios. This and other objects which will become apparent from the following disclosure, are provided with a computer-implemented method for continual learning in artificial neural networks, a computer-readable medium, and an autonomous vehicle comprising a data processing system, having the features of one or more of the appended claims.

In brief, to improve the generalization in training a DNNs in online settings, the method of the current invention proposes a general learning paradigm for sequential data that is referred to as Learn, Unlearn, RElearn (LURE), a dynamic reinitialization method to address the above-mentioned larger problem of generalization of parameterized networks on sequential data by selectively retaining the task-specific connections through the important criteria and re-randomizing the less important parameters at each mega batch of training. The proposed approach of selectively forgetting is crucial for retaining previous information all the while improving generalization to unseen samples.

In detail, and in a first aspect of the invention, the computer-implemented method for continual learning in artificial neural networks comprises the step of:
- randomly initializing a network;
- providing said network with a continuous batches of data stream containing a sequence of tasks;
- training said network for a plurality of epochs till convergence during a learning phase;
wherein the method comprises the steps of:
- introducing at least one unlearning phase after said learning phase; and
- introducing at least one relearning phase after said unlearning phase,
wherein the at least one unlearning phase comprises the step of forgetting a connection or connections irrelevant for a current task, and wherein the at least one relearning phase comprises the step of relearning the connection or connections relevant to said current task.

Thus, by interchanging between unlearning and relearning, the method of the current invention favors the preservation of the task-specific connections while implicitly increasing the model's capacity to learn incoming data, thereby guiding the network towards those desirable traits that efficiently improve performance and generalization in online learning settings.

To be noted that the incoming continuous batches of data stream can be provided by a video recorder, a scene recorder or any other type of image capturing devices.

To be also noted that a machine learning model reaches convergence when it achieves a state during training in which loss settles to within an error range around the final value. In other words, a model converges when additional training will not improve the model.

Advantageously, the step of forgetting the connection or connections irrelevant for a current task comprises the steps of:
- calculating, in a data-dependent manner, an importance coefficient of each connection independently of synaptic weight of said connection; and
- selectively forgetting the connection or connections irrelevant for a current task wherein the importance coefficients of said irrelevant connection or connections are lower than a predetermined first threshold.

The step of relearning the connection or connections relevant to the current task comprises the step of retaining task-specific connection or connections having importance coefficients higher than a predetermined second threshold.

The step of relearning the connection or connections relevant to the current task comprises the step of reinitializing synaptic weight or weights of the irrelevant connection or connections to a random value. Furthermore, the method comprises the step of unlearning said random value in a previous unlearning phase.

The step of relearning the connection or connections relevant to the current task comprises the step of updating the network using the reinitialized synaptic weight or weights for processing a next batch data stream. It is essential to identify and retain these task-specific connections to preserve the learned knowledge and to enable relearning of those unlearned connections through reinitialization and retraining.

The step of relearning the connection or connections relevant to the current task comprises the step of using the same number of epochs for each iteration of learning, unlearning and relearning phases.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the autonomous vehicle comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The invention will hereinafter be further elucidated with reference to the drawing of an exemplary embodiment of a computer-implemented method, a computer program and an autonomous vehicle comprising a data processing system according to the invention that is not limiting as to the appended claims.

In the drawing:
- figure 1 shows a schematic diagram for the computer-implemented method according to the invention;
- figure 2 shows a schematic diagram for the workings of a computer-implemented method according to the prior art;
- figure 3 shows a schematic diagram for the workings of the computer-implemented method according to the invention.

Whenever in the figures the same reference numerals are applied, these numerals refer to the same parts.

### Detailed description

### Learning from sequential data settings:

In this section, the lifelong learning framework is formulated as conceptualized in [1]. In any time learning at the macro scale (ALMA), the data is sampled from an underlying data distribution D_{x,y} with input x ∈ R^{D} and label y E 1, ..., C. Similar to [1], the method of the current invention focuses on the general problem of classification. ALMA focus on real-world settings where the data is delivered to the learner in the form of a stream S_{B} comprising t consecutive batches of samples. Let M be a collection of N >> 0 in distribution samples randomly selected from D_{x,y}, for i C 1, ..., t. The stream is then defined as the ordered sequence S_{B} = M₁, ..., Mₜ. Each dataset M is referred to as mega-batch, as it is composed of a large number of examples. Typically, a model fθ: RD → 1, ..., C updates its parameters by processing a mini batch of n ¡ ¡ N examples at the time from each mega- batch (M) in such a way to minimize its objective function. Since the data is passed as a stream, the model does not have access to the future mega-batches and is limited to one pass through the entire stream. However, the model might make several passes over the current and some previous mega-batches, although replaying too much might eventually deplete its computational budget. In ALMA, it is assumed that the rate at which mega batches arrive is slower than the training time of the model on each mega batch, and, therefore, the model can iterate over the mega batches at its disposal based on its discretion to maximize performance resulting in an overall data distribution that is not independent and identically distributed (i.i.d.) by the end of the stream. This implies a trade-off between effectively generalizing and fitting the current data at each mega-batch of training.

ALMA can be considered a special case of continual learning (CL) [6, 7, 8, 9], whose data distribution across batches (or tasks) is considered stationary. Fewer data in each learning step makes ALMA more difficult than CL, whereas dynamic data distributions across many learning stages present a problem for CL. Meanwhile, ALMA is also relevant to online learning [2] with the key difference that ALMA receives large batch data sequentially rather than in a stream. Given the analogous nature of ALMA to the real-world, the generalization of the model is examined in an ALMA setting through the lens of reinitialization.

### Training Paradigm/Methodology:

The goal of the current invention is to address the problem of the generalization of DNNs in learning from sequential data. For that, the method of the current invention proposes a Learn, Unlearn, and Relearn (LURE) training paradigm for learning from sequential data on ALMA settings, which interchanges the unlearning (selective forgetting) and relearning steps alternatively.

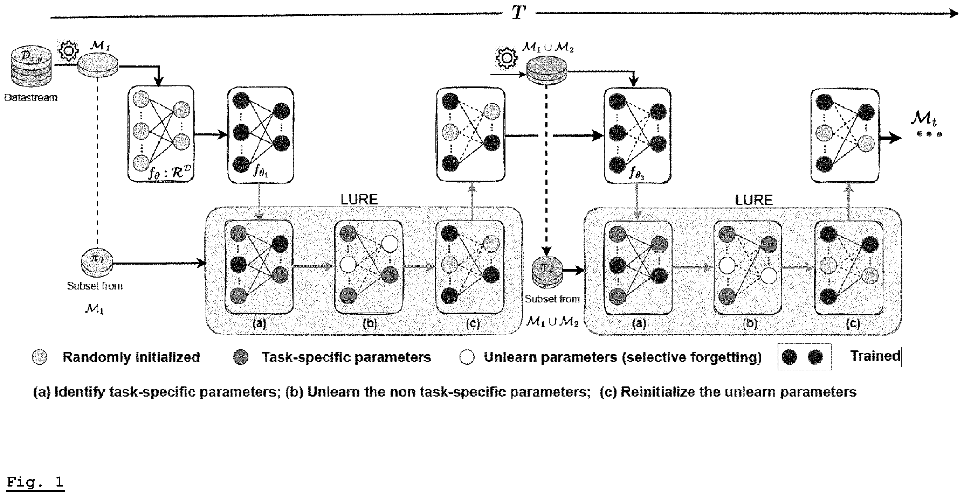

As demonstrated in Figure 1 and Algorithm 1, consider a deep network parameterized by fe. The network consists of convolution, batch norm, and fully connected layers with weight W and bias B terms. The framework of the current invention consists of three steps: a) learn b) unlearn c) relearn.

First, the randomly initialized network fe:R^{D} learns by training on mega-batch Mₜ belonging to the data stream D_{x,y} for e epochs till convergence.

Second, an unlearning step is introduced where the network selectively forgets the connections that are less relevant for the current task. To identify the task-irrelevant connections, the method of the current invention comprises the step of calculating the sensitivity (importance) of each connection independently of its weight in a data-dependent manner (π). For this purpose, the method of the current invention comprises the step of employing the algorithm from the pruning literature known as SNIP [5].

Third, the method of the current invention comprises the step of retaining the most important parameters (task-specific) by defining a binary mask (Mask) with a criterion (Mask *fe) and discarding the parameters that are less required for the current data. In the relearn step, the method of the current invention comprises the step of resetting and reinitializing the weight of the non-important connections to a random value that is unlearnt in the previous step. It is essential to identify and retain these task-specific connections to preserve the learned knowledge and to enable relearning of those unlearned connections through reinitialization and retraining.

Finally, in the relearning stage, the method of the current invention comprises the step of updating the network using this new initialization with the new incoming data Mₜ₊₁ or Mt+1 **∪** Mₜ for e epochs, where e is kept the same for each iteration. Thus, by interchanging between unlearning and relearning, the method of the current invention favors the preservation of the task-specific connections that can guide the network towards those desirable traits that efficiently improve performance and generalization.

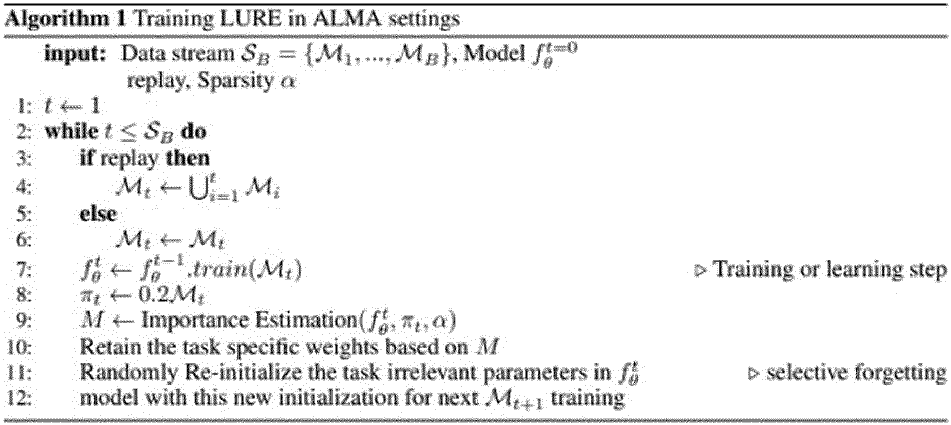

### Practical applicability and Broader impact:

The method of the current invention can potentially enhance the test accuracy and robustness of any real-world deployed machine learning system where the aspect of generalization is crucial as they are continuously trained on sequential data. For example, consider a large-scale social media website on which users continually upload images and content. To recommend material, filter out inappropriate media, and choose adverts, the organization requires up-to-date prediction models. Every day, millions of fresh data points may arrive, which must be quickly integrated into operational ML pipelines. In this scenario, it is logical to envision having a single model that is regularly updated with the most recent data. Every day additional training on the model with the updated and larger dataset might be undertaken. In these scenarios, the proposed framework (LURE) can improve the generalization and performance of the model to a greater extent as opposed to new training from the parameters of yesterday's model without reinitialization.

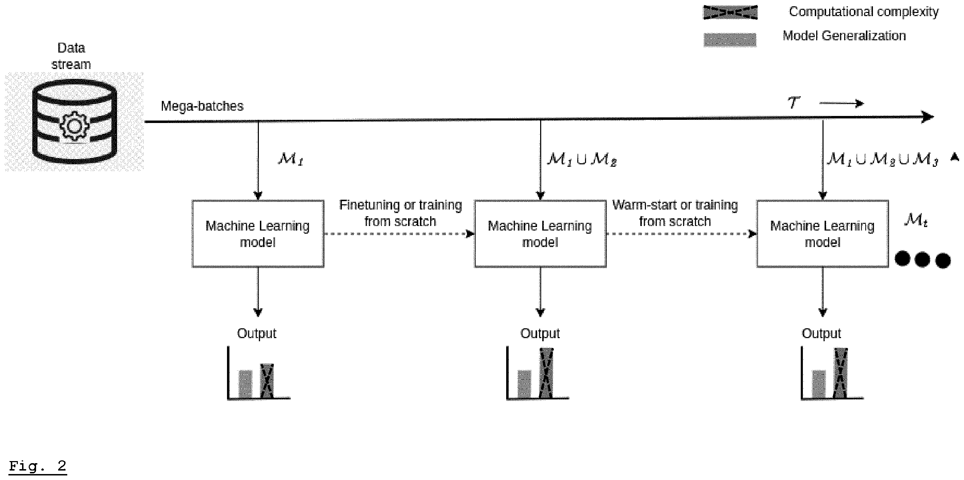

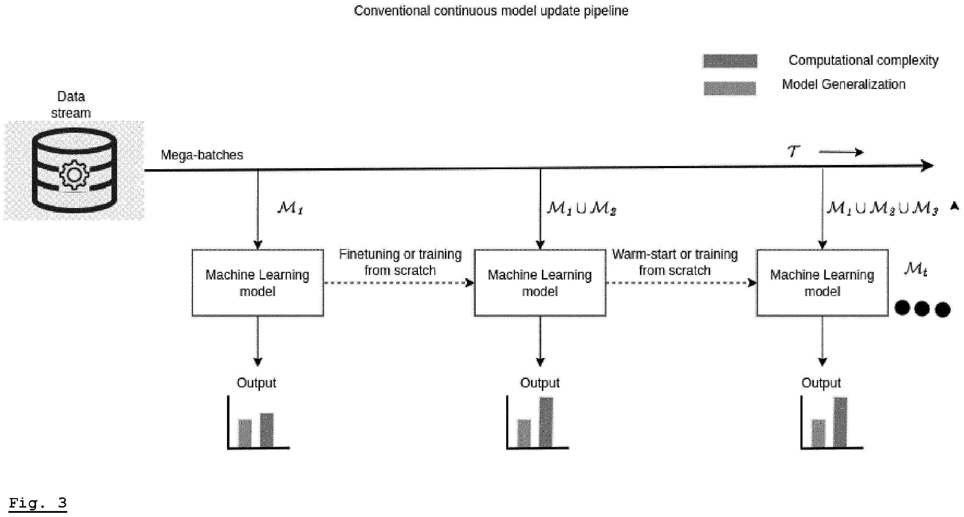

An abstract diagram representing the conventional and the proposed training paradigm for continuous model training and update in practical scenario is shown in Figure 2 and Figure 3 respectively. The method of the current invention improves generalization and reduces computational time for model update drastically compared to conventional continuous model deployment pipeline such as [10, 11].

Furthermore, in applications such as autonomous driving and industrial robotics where the deployed model needs to be frequently updated in order to stay in sync with the surroundings. Using LURE as a training paradigm to update the model can boost performance and generalization in a computationally efficient way as it provides a better initialization for continuous training compared to warm-starting or updating the model from scratch.

In addition to the above scenarios, the method of the current invention can be conceivably harnessed in applications of deep active learning where the goal is to find the most informative data to label with an oracle and incorporate it into the training set. However, the current active learning frameworks that retrain the models from scratch after each querying step are computationally expensive and partially responsible for deleterious environmental ramifications. The framework of the current invention allows models to be efficiently updated without sacrificing generalization and performance, thus, having a positive impact on society.

Embodiments of the present invention can include every combination of features that are disclosed herein independently from each other.

Typical application areas of the invention include, but are not limited to:
- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:
1. Lucas Caccia, Jing Xu, Myle Ott, Marc'Aurelio Ranzato, and Ludovic Denoyer. On Anytime Learning at Macroscale. arXiv, June 2021. doi: 10.48550/arXiv.2106.09563.
2. Jordan Ash and Ryan P Adams. On warm-starting neural network training. Advances in Neural Information Processing Systems, 33:3884-3894, 2020.
3. Jordan T Ash, Chicheng Zhang, Akshay Krishnamurthy, John Langford, and Alekh Agarwal.Deep batch active learning by diverse, uncertain gradient lower bounds. arXiv preprint arXiv:1906.03671, 2019
4. Yoram Baram, Ran El Yaniv, and Kobi Luz. Online choice of active learning algorithms. Journal of Machine Learning Research, 5(Mar):255-291, 2004.
5. Lee, N., Ajanthan, T. and Torr, P.H., 2018. Snip: Single-shot network pruning based on connection sensitivity. arXiv preprint arXiv:1810.02340.
6. Arani, E., Sarfraz, F. and Zonooz, B., 2022. Learning fast, learning slow: A general continual learning method based on complementary learning system. arXiv preprint arXiv:2201.12604.
7. Bhat, P., Zonooz, B. and Arani, E., 2022. Task Agnostic Representation Consolidation: a Self-supervised based Continual Learning Approach. arXiv preprint arXiv:2207.06267.
8. Sarfraz, F., Arani, E. and Zonooz, B., 2022. SYNERgy between SYNaptic consolidation and Experience Replay for general continual learning. arXiv preprint arXiv:2206.04016.
9. Bhat, P., Zonooz, B. and Arani, E., 2022. Consistency is the key to further mitigating catastrophic forgetting in continual learning. arXiv preprint arXiv:2207.04998.
10. Jeffrey Dunn. Introducing FBLearner Flow: Facebook's AI backbone. https://code.fb.com/core-data/introducing-fblearner-flow-facebook-s-ai-backbone/, 2016. Accessed: 2018-10-19.
11. Jeremy Hermann and Mike Del Balso. Meet Michelangelo: Uber's Machine Learning Platform. https://eng.uber.com/michelangelo/, 2017. Accessed: 2018-01-26.

## Claims

1. A computer-implemented method for online learning in an artificial neural network comprising the steps of:
- randomly initializing the network;
- providing said network with a continuous batch of a data stream containing a sequence of tasks;
- training said network for a plurality of epochs till a predetermined degree of convergence is reached during a learning phase;
**characterized in that** the method comprises the steps of:
- introducing at least one unlearning phase after said learning phase; and
- introducing at least one relearning phase after said unlearning phase,
wherein the at least one unlearning phase comprises the step of forgetting a connection or connections irrelevant for a current task, and wherein the at least one relearning phase comprises the step of relearning the connection or connections relevant to said current task.

2. The computer-implemented method of claim 1, **characterized in that** the step of forgetting the connection or connections irrelevant for a current task comprises the steps of:
- calculating, in a data-dependent manner, an importance coefficient of each connection independently of a synaptic weight of said connection; and
- selectively forgetting the connection or connections irrelevant for the current task wherein an importance coefficient of said irrelevant connection or connections is lower than a predetermined first threshold.

3. The computer-implemented method of claim 1 or 2, **characterized in that** the unlearning phase comprises the step of retaining a task-specific connection or connections having at least one importance coefficient higher than a predetermined first threshold.

4. The computer-implemented method of any one of the preceding claims, **characterized in that** the unlearning phase comprises the step of reinitializing a synaptic weight or weights of the irrelevant connection or connections to a random value.

5. The computer-implemented method of claim 4, **characterized in that** the method comprises the step of unlearning said random value in a previous unlearning phase.

6. The computer-implemented method of any one of the preceding claims, **characterized in that** the relearning phase comprises the step of updating the network using the reinitialized synaptic weight or weights for processing a next batch data stream or for processing a next batch of data stream combined with a current batch of data stream.

7. The computer-implemented method of any one of the preceding claims, **characterized in that** the method comprises the step of alternating the unlearning and the relearning phases wherein an unlearning phase is followed by a relearning phase and wherein a relearning phase is followed by an unlearning phase.

8. The computer-implemented method of claim 7, **characterized in that** a same number of epochs is used for each iteration of the learning, unlearning and relearning phases.

9. The computer-implemented method of any one of claims 1-8, **characterized in that** the method is employed on uploaded images and/or content so as to improve generalization and reduce computational time when realizing a model update in real time that is used to provide recommendations and/or filter out inappropriate data and/or stay in sync with the environment.

10. A computer-readable medium provided with a computer program, **characterized in that** when said computer program is loaded and executed by a computer, said computer program causes the computer to carry out the steps of the computer-implemented method according to any one of claims 1-9.

11. An autonomous vehicle comprising a data processing system loaded with a computer program, **characterized in that** said program is arranged for causing the data processing system to carry out the steps of the computer-implemented method according to any one of claim 1-9 for enabling said autonomous vehicle to continually adapt and acquire knowledge from an environment surrounding said autonomous vehicle.

## Amended claims

### Amended claims in accordance with Rule 137(2) EPC.

1. A computer-implemented method for online learning in an artificial neural network comprising the steps of:
- randomly initializing the network;
- providing said network with a continuous batch of a data stream containing a sequence of tasks;
- training said network for a plurality of epochs till a predetermined degree of convergence is reached during a learning phase;
**characterized in that** the method comprises the steps of:
- introducing at least one unlearning phase after said learning phase; and
- introducing at least one relearning phase after said unlearning phase,
wherein the at least one unlearning phase comprises the step of forgetting a connection or connections irrelevant for a current task, and wherein the at least one relearning phase comprises the step of relearning the connection or connections relevant to said current task, wherein the method comprises the steps of:
- reinitializing a synaptic weight or weights of the irrelevant connection or connections to a random value;
- unlearning said random value in a previous unlearning phase; and
- updating the network using the reinitialized synaptic weight or weights for processing a next batch data stream or for processing a next batch of data stream combined with a current batch of data stream.

2. The computer-implemented method of claim 1, **characterized in that** the step of forgetting the connection or connections irrelevant for a current task comprises the steps of:
- calculating, in a data-dependent manner, an importance coefficient of each connection independently of a synaptic weight of said connection; and
- selectively forgetting the connection or connections irrelevant for the current task wherein an importance coefficient of said irrelevant connection or connections is lower than a predetermined first threshold.

3. The computer-implemented method of claim 1 or 2, **characterized in that** the unlearning phase comprises the step of retaining a task-specific connection or connections having at least one importance coefficient higher than a predetermined first threshold.

4. The computer-implemented method of any one of the preceding claims, **characterized in that** the method comprises the step of alternating the unlearning and the relearning phases wherein an unlearning phase is followed by a relearning phase and wherein a relearning phase is followed by an unlearning phase.

5. The computer-implemented method of claim 4, **characterized in that** a same number of epochs is used for each iteration of the learning, unlearning and relearning phases.

6. The computer-implemented method of any one of claims 1-5, **characterized in that** the method is employed on uploaded images and/or content so as to improve generalization and reduce computational time when realizing a model update in real time that is used to provide recommendations and/or filter out inappropriate data and/or stay in sync with the environment.

7. A computer-readable medium provided with a computer program, **characterized in that** when said computer program is loaded and executed by a computer, said computer program causes the computer to carry out the steps of the computer-implemented method according to any one of claims 1-9.

8. An autonomous vehicle comprising a data processing system loaded with a computer program, **characterized in that** said program is arranged for causing the data processing system to carry out the steps of the computer-implemented method according to any one of claim 1-6 for enabling said autonomous vehicle to continually adapt and acquire knowledge from an environment surrounding said autonomous vehicle.
